# EUROPÄISCHE PATENTSCHRIFT

(11) **EP 1 248 532 B1**
(45) Veröffentlichungstag und Bekanntmachung des Hinweises auf die Patenterteilung: **13.07.2005**
(21) Anmeldenummer: 00993371.4
(22) Anmeldetag: 04.12.2000
(51) Int. Cl.: A23L 1/226, A23L 1/22

(54) **AROMEN UND AROMAKOMPOSITIONEN ENTHALTEND 4,8-DIMETHYL-3,7-NONADIEN-2-ON**
AROMAS AND AROMA COMPOSITIONS CONTAINING 4,8-DIMETHYL-3,7-NONADIEN-2-ONE
AROMES ET COMPOSITIONS D'AROMES CONTENANT DU 4,8-DIMETHYL-3,7-NONADIENE-2-ONE

(30) Priorität: 16.12.1999 DE 19961030
(43) Veröffentlichungstag der Anmeldung: 16.10.2002
(73) Patentinhaber: Symrise GmbH & Co. KG, 37603 Holzminden (DE)
(72) Erfinder: LAMBRECHT, Stefan, 37603 Holzminden (DE); KINDEL, Günter, 37671 Höxter (DE); DILK, Erich, 37603 Holzminden (DE); GÜNTERT, Matthias, Ridgewood, NJ 07450 (US)
(74) Vertreter: Eisenführ, Speiser & Partner
(86) Internationale Anmeldenummer: PCT/EP2000/012160
(87) Internationale Veröffentlichungsnummer: WO 2001/043567

(56) Entgegenhaltungen:
- R. WEYERSTAHL ET AL.: "Constituents of Brazilian Vassoura Oil" FLAVOUR AND FRAGRANCE JOURNAL, Bd. 11, - 1996 Seiten 15-23, XP000994831 in der Anmeldung erwähnt
- DATABASE CHEMABS [Online] CHEMICAL ABSTRACTS SERVICE, COLUMBUS, OHIO, US; MOTL, O. ET AL: "Terpenes. 270. Composition of Brasilian vassoura oil from Baccharis dracunculifolia" retrieved from STN Database accession no. 99:218399 CA XP002164314 & PARFUEM. KOSMET. (1983), 64(9), 488, 491 ,
- V.K. AGARWAL ET AL.: "A Search for New Aroma Chemicals. Part VI. Chemical Transformations of Citral into Perfumery Products" INDIAN PERFUMER, Bd. 27, Nr. 2, - 1983 Seiten 112-118, XP000994819 in der Anmeldung erwähnt
- YASUHIKO KURUSU ET AL.: "Catalysis by Tetrabromooxomolybdate(V) Complex: Oxidation of Olefins and Alcohols with t-butyl hydroperoxide" POLYHYDRON , Bd. 5, Nr. 1-2, - 1986 Seiten 289-296, XP000994833
- YOSHIRO MASUYAMA ET AL.: "Chemoselective Oxidation of Molybdenum Catalyst t-Butyl Hydroperoxide" TETRAHYDRON LETTERS, Bd. 25, Nr. 39, - 1984 Seiten 4417-4420, XP000985898

## Beschreibung

Die Erfindung betrifft Aromen und Aromakompositionen, die 4,8-Dimethyl-3,7-nonadien-2-on enthalten und ihre Verwendung in Nahrungs- und Genussmitteln oder in Produkten zur Mundhygiene.

In der Aromenindustrie besteht ein großer Bedarf an Stoffen, die in der Lage sind, in Aromen und Aromakompositionen Naturstoffe ganz oder teilweise zu ersetzen, die wegen ihrer mühsamen Art der Gewinnung teuer und nicht uneingeschränkt verfügbar und darüber hinaus in ihren Eigenschaften beträchtlichen naturbedingten Qualitatsschwankungen unterworfen sind.

Besonders interessant sind solche Stoffe dann, wenn sie nicht nur herausragende organoleptische (d.h. nur mit den Sinnen wahrnehmbare) Eigenschaften besitzen, sondern wenn sich mit ihnen auch wegen ihrer Stärke und Ergiebigkeit bemerkenswerte Effekte bei geringsten Dosierungen erzielen lassen.

In zunehmendem Maße sind in der Aromen- und Lebensmittelindustrie aber auch Stoffe wichtig, die neben der Eigenschaft, einen bestimmten Geruch und Geschmack zu verleihen, zusätzliche Eigenschaften, z.B eine höhere Ausgiebigkeit oder eine verbesserte Stabilität, aufweisen.

Es wurden Aromen und/oder Aromakompositionen gefunden, die E- und/oder Z-4,8-Dimethyl-3,7-nonadien-2-on der Formeln 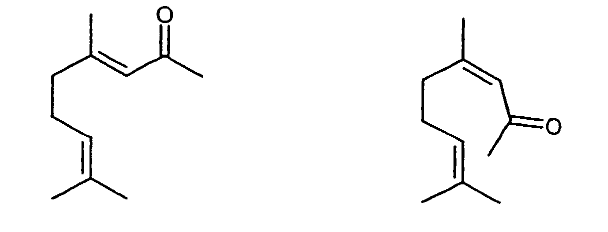 als einzelnes Isomere oder als Gemisch enthalten.

4,8-Dimethyl-3,7-nonadien-2-on ist an sich bekannt (z.B. DE A 2256347). Die geruchlichen Eigenschaften sind beschrieben worden (Flavour Fragrance J., 1996, 11, 15-23; Indian Perfum., 1983, 27, 112-18) Die Verwendung als Aroma ist neu.

Database Chemabs [Online] Chemical Abstracts Service, Columbus, Ohio, US; Motl, O. et al : Terpenes.270. Composition of Brasilian vassoura oil from Baccharis dracunculifolia retrieved from STN Database accession no. 99:218399 CA XP002164314 & Parfuem. Kosmet. (1983), 64 (9), 488, 491 offenbart die Verwendung von Vassoura Öl, das gemäß der genannten Veröffentlichung in Flavour and Fragrance J., 1996, 11, 15 - 23 die Verbindung 4,8-Dimethyl-3,7-nonadien-2-on umfasst, in Parfüms.

V. K. Agarwal et al. offenbaren in "A Search for New Aroma Chemicals, part VI. Chemical Transformations of Citral into Perfumery Products", Indian Perfumer, Bd. 27, Nr. 2, - 1983 Seiten 112 - 118, XP000994819,dass 4,8-Dimethyl-3,7-nonadien-2-on einen fruchtigen Geruch besitzt.

Yasuhiko Kurusu et al. offenbaren in "Catalysis by Tetrabromooxomolybdate(V) Complex: Oxidation of Olefins and Alcohols with t-butyl hydroperoxide" Polyhydron, Bd. 5, Nr. 1 - 2, 1986 Seiten 289 - 296, XP000994833 ein Verfahren zur Herstellung von 4,8-Dimethyl-3,7-nonadien-2-on.

Yoshiro Masuyama et al. offenbaren in "Chemoselective Oxidation of Molybdenum Catalyst t-Butyl Hydroperoxide Tetrahydron Letters, Bd. 25, Nr. 39, - 1984 Seiten 4417 - 4420, XP000985898" ein Verfahren zur Herstellung von 4,8-Dimethyl-3,7-nonadien-2-on.

Es ist überraschend, dass 4,8-Dimethyl-3,7-nonadien-2-on in Aromen neben herausragenden aromatisierenden Eigenschaften auch in diesen Aromen und Aromakompositionen die Ausgiebigkeit und die Intensität erhoht. Insbesondere hat 4,8-Dimethyl-3,7-nonadien-2-on auch einen verstärkenden Effekt in Aromen und Aromakompositionen. Zudem wird überraschenderweise die Stabilität der Aromen und Aromakompositionen verbessert.

In einer neuen Anwendungsform wird die Stabilität der Aromen und Aromenkompositionen durch Einsatz im sauren Medium erhöht.

Als saures Medium seien beispielsweise Erfrischungsgetränke mit und ohne Fruchtsaftanteil oder Getränkegrundstoffe genannt.

Der Anteil an Säure wird wobei gemäß Anspruch 1 so gewählt, dass ein p_{H} Wert <5, bevorzugt <3, eingestellt wird.

In Kombination mit anderen aromatisierenden Bestandteilen verleiht 4,8-Dimethyl-3,7-nonadien-2-on diesen Aromen und Aromakompositionen eine hervorragende Natürlichkeit. Zudem verleiht 4,8-Dimethyl-3,7-nonadien-2-on Aromen und Aromakompositionen überraschend eine außergewöhnliche Fülle.

Erfindungsgemäße und erfindungsgemäß zu verwendende Aromen und Aromakompositionen enthalten Aromakomponenten und 4,8-Dimethyl-3,7-nonadien-2-on. Aromakomponenten sind z.B. Etherische Öle, einheitliche Aromastoffe, pflanzliche Extrakte, Fruchtsäfte und deren Konzentrate.

Etherische Öle, pflanzliche Extrakte und Fruchtsäfte sowie deren Konzentrate können beispielsweise sein:
Citrusöle, Buccoblätteröle, Davanaöle, Cassiaöle, Cedernholzöle, Geraniumöle, Kornfuselöle, Lemongrasöle, Moschuskörneröle, Rosenöle, Zimtrindenöle, Nelkenöle, Karottensamenöle, Macisöle, Massoirindenöle, Sandelholzöle, und Fraktionen davon, Fruchtsaftkonzentrate aus allen gängigen Früchten, Guaranaextrakte, Holunderblütenextrakte, Iris Absolues, Ginster Absolues, Jasmin Absolues, Lakritzauszug, Osmanthus Absolues, Iriswurzelauszug, Vanilleextrakte, Zichorienextrakte, Zimtextrakte, Boronia Absolues.
Destillate aus allen gängigen Früchten.

Einheitliche Aromastoffe (bei chiralen Verbindungen als Racemat oder als einzelnes Enantiomer oder als enantiomerenangereichertes Gemisch) können beispielsweise sein:
alle gängigen gesättigten und ungesättigten Fruchtester aus den niedrigen aliphatischen Säuren C₁-C₁₂ und den niedrigen Alkoholen C₁-C₁₂, die aliphatischen gesättigten und ungesättigten Säuren C₁-C₁₄, die aliphatischen gesättigten und ungesättigten Alkohole C₃-C₁₄, die aliphatischen gesättigten und ungesättigten Aldehyde C₂-C₁₄, die gesättigten und ungesättigten gamma-Lactone C₅-C₁₄, Damascenon, alpha-Jonon, beta-Jonon, Himbeerketon, 2,5-Dimethyl-4-hydroxy-3(2H)-furanon, Limonen, Linalool, Linalooloxid, Phenylacetaldehyd, Phenylessigsäure, 2-Phenylethanol, Maltol, Vanillin, Eugenol, 2-Methyl-4-propyl-1,3-oxathian, 3-Methylthiohexanol, 4-Methyl-4-mercapto-2-pentanon, Methyleugenol, Anethol, Anisalkohol, Arusaldehyd, Guajakol, Zimtalkohol, Zimtaldehyd, Citral, Citronellal, Citronellol, Nerol, Geraniol, Ethylvanillin, Benzylalkohol, Anisaldehyd, alle gängigen Cinnamylester, alle gängigen Benzylester, Damascone, Diacetyl, Diethylmalonat, Dihydrocumarin, beta-7,8-Dihydrojonon, Dimethylanthranilat, Methylanthranilat, 2(5)-Ethyl-5(2)-methyl-4-hydroxy-3(2H)-furanon, E- und Z-4,8-Dimethyl-3,7-nonadien-2-ol, Ethylmaltol, Eucalyptol, Farnesal, Fanesol, Heliotropin, alle gängigen cis-3-Hexenylester, alpha-Iron, Menthol, Menthylacetat, Ethyldecadienoat, Methyldihydrojasmonat, Methylcinnamat, Ethylcinnamat, Methylsalicylat, Milchsäure, Myrcen, Nerylacetat, Geranylacetat, Nootkaton, 2,3-Pentandion, alle gängigen 2-Alkanone, 3-Thiohexanol, 8-Thiomenthan-3-on, Rosenoxid, 4-Ketoisophoron, Acetaldehyddiethylacetal, Acetaldeydmethylethylacetal, cis-Carvylacetat, Caryophyllen, Caryophyllenoxid, 1,4-Cineol, Citroxide, trans-2-Hexenaldimethylacetal, Linalylacetat, Nerolidol, Perillaaldehyd, L-Perillylacetat, alpha- und beta-Pinen, Sinensal, gamma-Terpinen, 4-Terpineol, Terpineolen, Terpinylacetat, Valencen.

Bevorzugte Aromakomponenten sind:
Ethensche Öle, pflanzliche Extrakte, Fruchtsäfte und deren Konzentrate wie zum Beispiel Citrusöle, Buccoblätteröle, Davanaöle, Cassiaöle, Cedernholzole, Lemongrasöle, Rosenöle, Zimtrindenöle, Nelkenöle, Karottensamenöle, Macisöle, Massoirindenöle, Sandelholzöle, und Fraktionen davon.
Fruchtsaftkonzentrate aus allen gängigen Früchten.
Destillate aus allen gängigen Früchten.
Einheitliche Aromastoffe (bei chiralen Verbindungen als Racemat oder als einzelnes Enantiomer oder als enantiomerenangereichertes Gemisch) wie zum Beispiel alle gängigen gesättigten und ungesättigten Fruchtester aus den niedrigen aliphatischen Säuren C₁-C₁₂ und den niedrigen Alkoholen C₁-C₁₂, die aliphatischen gesättigten und ungesättigten Säuren C₁-C₁₄, die aliphatischen gesättigten und ungesättigten Alkohole C₃-C₁₄, die aliphatischen gesättigten und ungesattigten Aldehyde C₂-C₁₄, die gesättigten und ungesättigten gamma-Lactone C₅-C₁₄, Damascenon, alpha-Jonon, beta-Jonon, Himbeerketon, 2,5-Dimethyl-4-hydroxy-3(2H)-furanon, Limonen, Linalool, Linalooloxid, Phenylacetaldehyd, Phenylessigsaure, 2-Phenylethanol, Maltol, Vanillin, Eugenol, 2-Methyl-4-propyl-1,3-oxathian, 3-Methylthiohexanol, 4-Methyl-4-mercapto-2-pentanon, Methyleugenol, Anethol, Anisalkohol, Anisaldehyd, Guajakol, Zimtalkohol, Zimtaldehyd, Citral, Citronellal, Citronellol, Nerol, Geraniol, Ethylvanillin, Benzylalkohol, Anisaldehyd, alle gängigen Cinnamylester, alle gängigen Benzylester, Damascone, Diacetyl, Diethylmalonat, Dihydrocumarin, beta-Dihydrojonon, Dimethylanthranilat, Methylanthranilat, 2(5)-Ethyl-5(2)-methyl-4-hydroxy-3(2H)-furanon, E- und Z-4,8-Dimethyl-3,7-nonadien-2-ol, Ethylmaltol, Heliotropin, alle gängigen cis-3-Hexenylester, alpha-Iron, Ethyldecadienoat, Methyldihydrojasmonat, Methylcinnamat, Ethylcmnamat, Methylsalicylat, Nootkaton, 8-Thiomenthanon-3, Rosenoxid, Ketoisophoron, Acetaldehyddiethylacetal, Acetaldeydmethylethylacetal, cis-Carvylacetat, Caryophyllen, Caryophyllenoxid, 1,4-Cineol, Citroxide, trans-2-Hexenaldimethylacetal, Linalylacetat, Nerolidol, Perillaaldehyd, L-Perillylacetat, alpha- und beta-Pinen, Sinensal, gamma-Terpinen, 4-Terpineol, Terpineolen, Terpinylacetat, Valencen.

Insbesondere bevorzugt werden die folgenden Aromakomponenten:
Etherische Öle, pflanzliche Extrakte, Fruchtsäfte und deren Konzentrate wie zum Beispiel Citrusöle, Buccoblätteröle, Cassiaöle, Cedernholzöle, Lemongrasöle, Karottensamenöle, Macisöle, Massoirindenöle, Sandelholzöle, und Fraktionen davon.
Fruchtsaftkonzentrate aus allen gängigen Früchten.
Destillate aus allen gängigen Früchten.
Einheitliche Aromastoffe (bei chiralen Verbindungen als Racemat oder als einzelnes Enantiomer oder als enantiomerenangereichertes Gemisch) wie zum Beispiel alle gängigen gesättigten und ungesättigten Fruchtester aus den niedrigen aliphatischen Säuren C₁-C₁₂ und den niedrigen Alkoholen C₁-C₁₂, die aliphatischen gesättigten und ungesättigten Säuren C₁-C₁₄, die aliphatischen gesättigten und ungesättigten Alkohole C₃-C₁₄, die aliphatischen gesättigten und ungesättigten Aldehyde C₂-C₁₄, die gesättigten und ungesättigten gamma-Lactone C₅-C₁₄, Damascenon, alpha-Jonon, beta-Jonon, Himbeerketon, 2,5-Dimethyl-4-hydroxy-3(2H)-furanon, Limonen, Linalool, Phenylacetaldehyd, 2-Phenylethanol, Maltol, Vanillin, Eugenol, 2-Methyl-4-propyl-1,3-oxathian, 3-Methylthiohexanol, 4-Methyl-4-mercapto-2-pentanon, Anethol, Anisalkohol, Anisaldehyd, Guajakol, Zimtalkohol, Zimtaldehyd, Citral, Citronellal, Citronellol, Nerol, Geraniol, Ethylvanillin, Benzylalkohol, Anisaldehyd, alle gängigen Cinnamylester, alle gängigen Benzylester, Damascone, Diacetyl, Dihydrocumarin, beta-Dihydrojonon, Dimethylanthranilat, Methylanthranilat, 2(5)-Ethyl-5(2)-methyl-4-hydroxy-3(2H)-furanon, E- und Z-4,8-Dimethyl-3,7-nonadien-2-ol, Ethylmaltol, Heliotropin, alle gängigen cis-3-Hexenylester, alpha-Iron, Ethyldecadienoat, Methyldihydrojasmonat, Methylcinnamat, Ethylcinnamat, Nootkaton, 8-Thiomenthanon-3, Rosenoxid, Ketoisophoron, Acetaldehyddiethylacetal, Acetaldeydmethylethylacetal, cis-Carvylacetat, Caryophyllen, Caryophyllenoxid, 1,4-Cineol, Citroxide, trans-2-Hexenaldimethylacetal, Linalylacetat, Nerolidol, Perillaaldehyd, L-Perillylacetat, alpha- und beta-Pinen, Sinensal, gamma-Terpinen, 4-Terpineol, Terpineolen, Terpmylacetat, Valencen.

Erfindungsgemäße Minzaromen und Minzaromakompositionen bestehen aus Minzaromakomponenten. Dies können beispielsweise sein

Etherische Öle wie zum Beispiel Pfefferminzöle, Krauseminzöle, Mentha-Arvensis-Öle, Nelkenöle, Citrusöle, Zimtrindenöle, Wintergrünöle, Cassiaöle, Davanaöle, Fichtennadelöle, Eucalyptusöle, Fenchelöle, Galbanumöle, Ingweröle, Kamillenöle, Kümmelöle, Rosenöle, Geraniumöle, Salbeiöle, Scharfgarbenöle, Sternanisöle, Thymianöle, Wacholderbeeröle, Angelikawurzelöle, und die Fraktionen dieser Öle.

Einheitliche Aromastoffe (bei chiralen Verbindungen als Racemat oder als einzelnes Enantiomer oder als enantiomerenangereichertes Gemisch) wie zum Beispiel Menthol, Menthon, Isomenthon, Menthylacetat, Menthofuran, Mintlacton, Eucalyptol, Limonen, Eugenol, Pinen, Sabinenhydrat, 3-Octanol, Carvon, gamma-Octalacton, gamma-Nonalacton, Germacren-D, Vindiflorol, 1,3E,5Z-Undecatrien, Isopulegol, Pipenton, 3-Octylacetat, Isoamylisovalerianat, Hexanol, Hexanal, cis-3-Hexenol, Linalool, E- und Z-4,8-Dimethyl-3,7-nonadien-2-ol, alpha-Terpineol, cis und trans Carvylacetat, p-Cymol, Damascenon, Damascone, Dimethylsulfid, Fenchol, cis-4-Heptenal, Isobutyraldehyd, Isovaleraldehyd, cis-Jasmon, Anisaldehyd, Methylsalicylat, Myrtenylacetat, 2-Phenylethylalkohol, 2-Phenylethylisobutyrat, 2-Phenylethylisovalerat, Zimtaldehyd, Geraniol, Nerol.

Verbindungen mit physiologischem Kühleffekt wie z.B.
Menthol, Menthonglycerinacetal, Menthyllactat, substituierte Menthyl-3-carbonsäureamide (z.B. Menthyl-3-carbonsäure-N-ethylamid), 2-Isopropyl-N,2,3-trimethylbutanamid, substituierte Cyclohexancarbonsäureamide, 3-Menthoxypropan-1,2-diol, 2-Hydroxyethylmenthyl-carbonat, 2-Hydroxypropylmenthylcarbonat, N-Acetylglycinmenthylester, Menthylhydroxy-carbonsäureester (z.B. Menthyl-3-hydroxybutyrat), Menthylbernsteinsäureester, 2-Mercaptocyclodecanon, 2-Isopropyl-5-methylcyclohexyl-5-oxo-2-pyrrolidincarbonsäure.

Süßstoffe wie z.B
Aspartam, Sacchann, Acesulfam-K, Sorbit; Xylit, Cyclamate, (z.B. Natriumcyclamat), Sucralose, Alitam, Neotam, Thaumatin, Neohesperidin DC, Maltit, Lactit.

Bevorzugte Minzaromakomponenten sind:
Etherische Öle wie zum Beispiel Pfefferminzöle, Krauseminzöle, Mentha-Arvensis-Öle, Nelkenöle, Citrusöle, Wintergrünöle, Cassiaöle, Davanaöle, Fichtennadelöle, Eucalyptusöle, Fenchelöle, Galbanumöle, Ingweröle, Kamillenöle, Kummelole, Geraniumöle, Salbeiöle, Scharfgarbenöle, Stemanisöle, Thymianöle, Wacholderbeeröle, Angelikawurzelöle, und die Fraktionen dieser Öle.

Einheitliche Aromastoffe (bei chiralen Verbindungen als Racemat oder als einzelnes Enantiomer oder als enantiomerenangereichertes Gemisch) wie zum Beispiel Menthol, Menthon, Isomenthon, Menthylacetat, Menthofuran, Mintlacton, Eucalyptol, Limonen, Eugenol, Pinen, Sabinenhydrat, 3-Octanol, Carvon, Isopulegol, Piperiton. 3-Octylacetat, Hexanol, Hexanal, cis-3-Hexenol, Linalool, E- und Z-4,8-Dimethyl-3,7-nonadien-2-ol, alpha-Terpineol, cis und trans Carvylacetat, p-Cymol, Dimethylsulfid, cis-4-Heptenal, Isobutyraldehyd, Isovaleraldehyd, cis-Jasmon, Anisaldehyd, Methylsalicylat, 2-Phenylethylalkohol, 2-Phenylethylisobutyrat, 2-Phenylethylisovalerat, Zimtaldehyd, Geraniol, Nerol.

Bevorzugt:
Verbindungen mit physiologischem Kühleffekt wie z.B. Menthol, Menthonglycerinacetal, Menthyllactat, Menthyl-3-carbonsäure-N-ethylamid, 2-Isopropyl-N,2,3-trimethylbutanamid, 3-Menthoxypropan-1,2-diol, 2-Hydroxyethylmenthylcarbonat, 2-Hydroxypropylmenthylcarbonat, N-Acetylglycinmenthylester, Menthyl-3-hydroxybutyrat, Menthylbemsteinsaureester, 2-Isopropyl-5-methylcyclohexyl 5-oxo-2-pyrrolidincarbonsäure.

Bevorzugt Süßstoffe wie z.B
Aspartam, Saccharin, Acesulfam-K, Sorbit; Xylit, Cyclamate, (z.B. Natriumcyclamat), Sucralose, Alitam

Insbesondere bevorzugt werden die folgenden Minzaromakomponenten:
Etherische Öle wie zum Beispiel Pfefferminzole, Krauseminzöle, Mentha-Arvensis-Öle, Wintergrünöle, und die Fraktionen dieser Öle.
Einheitliche Aromastoffe (bei chiralen Verbindungen als Racemat oder als einzelnes Enantiomer oder als enantiomerenangereichertes Gemisch) wie zum Beispiel Menthol, Menthon, Isomenthon, Menthylacetat, Menthofuran, Mintlacton, Eucalyptol, Limonen, Sabinenhydrat, Carvon, Isopulegol, Piperiton, 3-Octylacetat, Hexanol, Hexanal, cis-3-Hexenol, Linalool, E- und Z-4,8-Dimethyl-3,7-nonadien-2-ol, alpha-Terpineol, cis und trans Carvylacetat, p-Cymol, Dimethylsulfid, cis-4-Heptenal, Isobutyraldehyd, Isovaleraldehyd, cis-Jasmon, Anisaldehyd, Methylsalicylat, 2-Phenylethylalkohol, Zimtaldehyd.

Insbesondere.
Verbindungen mit physiologischem Kuhleffekt wie z.B Menthol, Menthonglycerinacetal, Menthyllactat, Menthyl-3-carbonsaure-N-ethylamid, 3-Menthoxypropan-1,2-diol, 2-Hydroxyethylmenthylcarbonat, 2-Hydroxypropylmenthylcarbonat, 2-Isopropyl5-methylcyclohexyl 5-oxo-2-pyrrolidincarbonsäure.

Insbesondere Süßstoffe wie z.B.
Aspartam, Saccharin, Acesulfam-K, Sorbit; Xylit, Cyclamate, (z.B. Natriumcyclamat), Sucralose, Alitam, Neotam.

Es ist auch möglich, Minz- und Fruchtaromakompositionen sowie die verschiedenen Aromakomponenten gemeinsam einzusetzen.

Aus den Aromakompositionen werden durch die Zugabe von Lösungsmittel und/oder Trägerstoffe (Adsorbens oder Feinverteilungsmittel) gebrauchsfertige Aromen, die üblicherweise in dieser verdünnten Form Lebensmitteln und Genussmitteln sowie Produkten für die Mundhygiene zugegeben werden. Diese gebrauchsfertigen Aromen können Zusatzstoffe und Hilfsstoffe enthalten. Als solche können angesehen werden Konservierungsstoffe, Farbstoffe, Antioxidantien, Fließmittel, Verdickungsmittel, etc.

In den erfindungsgemäßen und den erfindungsgemäß a verwendenden Aromakompositionen liegt die eingesetzte Menge an 4,8-Dimethyl-3,7-nonadien-2-on in der Regel bei 0,001 Gewichtsteile bis 10 Gewichtsteile, insbesondere bei 0,01 Gewichtsteile bis 1 Gewichtsteile bezogen auf die Gesamtmenge.

Die erfindungsgemäßen und die erfindungsgemäß zu verwendenden Aromakompositionen sowie gebrauchsfertigen Aromen können in flüssiger, sprühgetrockneter oder auch in verkapselter Form vorliegen.

Die sprühgetrocknete Form wird aus den flüssigen Kompositionen hergestellt, indem man eine Emulsion unter Zugabe von bestimmten Mengen eines Trägerstoffs, vorzugsweise Biopolymere wie Stärke, Maltodextrin und Gummi Arabicum, herstellt. Diese Emulsion wird in Sprühtrocknem durch Feinstverteilung bei gleichzeitiger Temperaturanwendung getrocknet. Es resultiert ein Pulver mit der gewünschten Beladung an flüssigem Aroma.

Die verkapselte Form wird ebenfalls aus den flüssigen Kompositionen durch Zugabe eines Trägerstoffs hergestellt. Es gibt verschiedenen Technologien, mit denen Aromakapseln hergestellt werden können. Die gängigsten sind die Extrusion, die Sprühgranulation und die Coazervation. Die Partikelgrößen reichen üblicherweise von 10 µm bis 5 mm. Die gängigsten Kapselmaterialien sind verschiedene Stärken, Maltodextrin, Gelatine. In diesen Kapseln ist das flüssige oder feste Aroma eingeschlossen und kann durch verschiedene Mechanismen wie Wärmeanwendung, ph-Verschiebung oder Kaudruck freigesetzt werden.

Derartige Aromen können im gesamten Nahrungs- und Genussmittelbereich sowie in Produkten für die Mundhygiene verwendet werden. Insbesondere können sie für die Aromatisierung von Fettmassen, Backwaren, Joghurt, Speiseeis, Süßwaren, Kaugummi, alkoholischen und nicht-alkoholischen Getränken, Tabak, Zahnpasta und Mundwässern verwendet werden.

Die Dosierung derartiger Aromen liegt vorzugsweise bei 0,0005 bis 2 Gew.-%, insbesondere bei 0,01 bis 1 Gew.-%, bezogen auf das fertige Lebens- oder Genussmittel bzw. die Produkte für die Mundhygiene.

Es ist seit langem bekannt, dass viele Aromen und Getränke nur eine geringe Haltbarkeit haben. Es bilden sich während der Lagerung durch Abbaureaktion sensorisch sehr intensive Verbindungen, die durch ihr unerwünschtes Aromaprofil zu einer geringeren Akzeptanz des Produktes führen. Deshalb ist es ein Bestreben der Lebens- und Genussmittelindustrie, Aromen und Getränkegrundstoffe mit einer erhöhten Haltbarkeit herzustellen. Diese Forderung erfüllt das erfindungsgemäß eingesetzte 4,8-Dimethyl-3,7-nonadien-2-on in besonderem Maße. Wird z.B. einem Zitrusaroma das 4,8-Dimethyl-3,7-nonadien-2-on zugesetzt, so bleibt das Zitrusaroma über einen längeren Zeitraum erhalten.

Zur wirtschaftlichen Anwendung von Aromen- und Aromakonzentraten ist es in der Aromenindustrie erwünscht, Aromastoffe zu verwenden, die bereits in kleinsten Konzentrationen wirksam sind und zudem einen verstärkenden Effekt aufweisen. Diese Forderung erfüllt das 4,8-Dimethyl-3,7-nonadien-2-on in besonderem Maße. Ersetzt man beispielsweise die Hälfte des Citrals (ein typischer Zitrusaromastoff mit ähnlichen Aromaeigenschaften) durch eine sensorisch adäquate Menge 4,8-Dimethyl-3,7-nonadien-2-on, so ist das Aroma mit 4,8-Dimethyl-3,7-nonadien-2-on intensiver als das Aroma ohne 4,8-Dimethyl-3,7-nonadien-2-on und weist jeweils einen deutlich frischeren, natürlicheren und stärker nach Citrone schmeckenden Charakter auf.

Die Herstellung von E- und/oder Z-4,8-Dimethyl-3,7-nonadien-2-on erfolgt in an sich bekannter Weise.

4,8-Dimethyl-3,7-nonadien-2-on kann vorteilhaft aus 4,8-Dimethyl-3,7-nonadien-2-ol hergestellt werden, das z.B. durch eine Grignard-Reaktion aus Citral und Methylmagnesiumchlorid synthetisiert wurde (Indian Perfum., 1983, 27, 112-18). Die Oxidation zu 4,8-Dimethyl-3,7-nonadien-2-on ist bekannt (z.B. Inst. Quim. Univ. Nacl. Auton. Mex. 1969, 21, 226-240). Dabei werden Reagenzien wie Mangandioxid und Chromtrioxid verwendet, die schwierig zu handhaben sind.

Ein bevorzugtes Verfahren zur Herstellung von 4,8-Dimethyl-3,7-nonadien-2-on ist dadurch gekennzeichnet, dass 4,8-Dimethyl-3,7-nonadien-2-ol in Gegenwart eines Katalysators und eines Wasserstoffakzeptors umgesetzt wird.

Die Umsetzung kann durch die folgende Reaktionsgleichung erläutert werden:

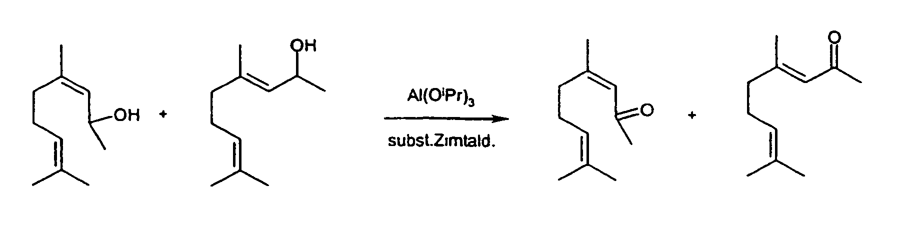

Diese Reaktion verzichtet auf kritische Reagenzien und ist problemlos auch im größeren Maßstab durchführbar.

Als Katalysatoren können Aluminiumalkoxide wie Alummiumtritertiärbutylat und Aluminiumtriisopropylat, bevorzugt Alummiumtriisopropylat eingesetzt werden.

Die Reaktionstemperatur liegt zwischen 40 °C und Rückflusstemperatur, bevorzugt zwischen 60-120°C.

Als Wasserstoffakzeptor können die bekannten Verbindungen eingesetzt werden (Org. Reactions, Bd. 6, S.207-272). Es hat sich aber gezeigt, dass besonders vorteilhaft die Verwendung von alpha-alkylsubstituierten Zimtaldehyd-Derivaten, insbesondere alpha-Amyl- und alpha-Hexylzimtaldehd ist, da in diesen Fällen sowohl der Umsatz gut als auch die Destillation vereinfacht ist. 4,8-Dimethyl-3,7-nonadien-2-on und die alkylsubstituierten Zimtaldehyd und -alkohol-Derivate sind dann einfach zu trennen.

### Beispiele:

### Beispiel 1

### Citrus-Aromen /Citrone

### a) Citronen-Aroma (ohne 4,8-Dimethyl-3,7-nonadien-2-on)

Es werden vermischt (alle Angaben als Gewichtsteile).

| | |
|---|---|
| 4-Terpineol | 5 |
| Aldehyd C10 | 2 |
| Aldehyd C9 | 3 |
| Geraniol | 5 |
| Nerol | 5 |
| Citronellal | 10 |
| Lionalool | 20 |
| alpha-Terpineol | 25 |
| Geranylacetat | 35 |
| Nerylacetat | 55 |
| Citronenöl citralfrei | 400 |
| abs. Ethanol | 435 |

### b) Citronen-Aroma (mit 4,8-Dimethyl-3,7-nonadien-2-on)

Es werden vermischt (alle Angaben als Gewichtsteile):

| | |
|---|---|
| 4-Terpineol | 5 |
| Aldehyd C10 | 2 |
| Aldehyd C9 | 3 |
| Geraniol | 5 |
| Nerol | 5 |
| Citronellal | 10 |
| Lionalool | 20 |
| alpha-Terpineol | 25 |
| Geranylacetat | 35 |
| 4,8-Dimethyl-3,7-nonadien-2-on | 40 |
| Nerylacetat | 55 |
| Citronenöl citralfrei | 395 |
| abs. Ethanol | 400 |

Test im Fertiggetränk (Dos.. 1 g/100 Liter RTD), Joghurt ohne Fruchtzubereitung mit 3,5% Fettgehalt (Dos.: 5g/100kg), Eiscreme (Dos.:5g/100 kg), alkoholisches Getränk mit 40 Vol-% Alkohol(Dos : 1,5g/100 ltr) und Hartkaramellen (Dos. 10g/100 kg)

### Ergebnis:

Das Citronen-Aroma mit 4,8-Dimethyl-3,7-nonadien-2-on weist jeweils einen deutlich frischeren, natürlicheren und stärker nach Citrone schmeckenden Charakter auf.

### Beispiel 2

### a) Citronen-Aroma (mit Citral /ohne 4,8-Dimethyl-3,7-nonadien-2-on)

Es werden vermischt (alle Angaben als Gewichtsteile):

| | |
|---|---|
| 4-Terpineol | 5 |
| Aldehyd C10 | 2 |
| Aldehyd C9 | 3 |
| Geraniol | 5 |
| Nerol | 5 |
| Citronellal | 10 |
| Lionalool | 20 |
| alpha-Terpineol | 25 |
| Geranylacetat | 35 |
| Citral | 400 |
| Nerylacetat | 55 |
| Citronenöl citralfrei | 400 |
| abs. Ethanol | 35 |

### b) Citronen-Aroma (50% Citral ersetzt durch sensorisch adäquate Menge 4,8-Dimethyl-3,7-nonadien-2-on)

Es werden vermischt (alle Angaben als Gewichtsteile):

| | |
|---|---|
| 4-Terpineol | 5 |
| Aldehyd C10 | 2 |
| Aldehyd C9 | 3 |
| Geraniol | 5 |
| Nerol | 5 |
| Citronellal | 10 |
| Lionalool | 20 |
| alpha-Terpineol | 25 |
| Geranylacetat | 35 |
| 4,8-Dimethyl-3,7-nonadien-2-on | 20 |
| Nerylacetat | 55 |
| Citronenöl citralfrei | 400 |
| abs. Ethanol | 215 |
| Citral | 200 |

Test im Fertiggetränk (Dos.: 1g/100 Liter RTD), Joghurt ohne Fruchtzubereitung mit 3,5% Fettgehalt (Dos. 5g/100kg), Eiscreme (Dos.:5g/100 kg), alkoholisches Getränk mit 40 vol-% Alkohol(Dos. 1,5g/100 ltr) und Hartkaramellen (Dos.: 10g/100 kg)

### Ergebnis:

Das Citronen-Aroma mit 4,8-Dimethyl-3,7-nonadien-2-on ist intensiver als das Aroma ohne 4,8-Dimethyl-3,7-nonadien-2-on und weist jeweils einen deutlich frischeren, natürlicheren und deutlich stärker nach Citrone schmeckenden Charakter auf.

### Beispiel 3

### Citronen-Aroma (mit Citral/ohne 4,8-Dimethyl-3,7-nonadien-2-on)

Es werden vermischt (alle Angaben als Gewichtsteile):

| | |
|---|---|
| 4-Terpineol | 5 |
| Aldehyd C10 | 2 |
| Aldehyd C9 | 3 |
| Geraniol | 5 |
| Nerol | 5 |
| Citronellal | 10 |
| Lionalool | 20 |
| alpha-Terpineol | 25 |
| Geranylacetat | 35 |
| Citral | 400 |
| Nerylacetat | 55 |
| Citronenöl citralfrei | 400 |
| abs. Ethanol | 35 |

### Citronen-Aroma (ohne Citral/ mit sensorisch adaquater Menge 4,8-Dimethyl-3,7-nonadien-2-on)

Es werden vermischt (alle Angaben als Gewichtsteile)

| | |
|---|---|
| 4-Terpineol | 5 |
| Aldehyd C10 | 2 |
| Aldehyd C9 | 3 |
| Geraniol | 5 |
| Nerol | 5 |
| Citronellal | 10 |
| Lionalool | 20 |
| alpha-Terpineol | 25 |
| Geranylacetat | 35 |
| 4,8-Dimethyl-3,7-nonadien-2-on | 35 |
| Nerylacetat | 55 |
| Citronenöl citralfrei | 400 |
| abs. Ethanol | 400 |

Test im Fertiggetränk (10° Brix, 0,3% Citronensäure)

### Ergebnis:

Das Citronen-Aroma mit 4,8-Dimethyl-3,7-nonadien-2-on ist wesentlich stabiler und weist selbst nach 8 Wochen Lagerzeit keine Abbau-Noten auf.

### Beispiel 4

### Citronen-Aroma (ohne Citral/ohne 4,8-Dimethyl-3,7-nonadien-2-on)

Es werden vermischt (alle Angaben als Gewichtsteile).

| | |
|---|---|
| 4-Terpineol | 5 |
| Aldehyd C 10 | 2 |
| Aldehyd C9 | 3 |
| Geraniol | 5 |
| Nerol | 5 |
| Citronellal | 10 |
| Lionalool | 20 |
| alpha-Terpineol | 25 |
| Geranylacetat | 35 |
| Nerylacetat | 55 |
| Citronenöl citralfrei | 400 |
| abs. Ethanol | 435 |

### Citronen-Aroma (ohne Citral/mit Aromakonzentrat Typ C inclusive 4,8-Dimethyl-3,7-nonadien-2-on)

Es werden vermischt (alle Angaben als Gewichtsteile):

| | |
|---|---|
| 4-Terpineol | 5 |
| Aldehyd C10 | 2 |
| Aldehyd C9 | 3 |
| Geraniol | 5 |
| Nerol | 5 |
| Citronellal | 10 |
| Lionalool | 20 |
| alpha-Terpineol | 25 |
| Geranylacetat | 35 |
| Aromakonzentrat Typ C | 35 |
| Nerylacetat | 55 |
| Citronenöl citralfrei | 400 |
| abs. Ethanol | 400 |

### Aromakonzentrat Typ C:

Es werden vermischt (alle Angaben als Gewichtsteile)

| | |
|---|---|
| Perillaaldehyd | 10 |
| Aldehyd C11 | 20 |
| Citronellal | 100 |
| Aldehyd C9 | 100 |
| 4,8-Dimethyl-3,7-nonadien-2-on | 770 |

Test im Fertiggetränk (Dos. 1g/100 Liter RTD), Joghurt ohne Fruchtzubereitung mit 3,5% Fettgehalt (Dos.: 5g/100kg), Eiscreme (Dos.:5g/100 kg), alkoholisches Getränk mit 40 Vol-% Alkohol(Dos.: 1,5g/100 ltr) und Hartkaramellen (Dos.: 10g/100 kg).

### Ergebnis:

Das Citronen-Aroma mit Aromakonzentrat Typ C inclusive 4,8-Dimethyl-3,7-nonadien-2-on weist einen fast identischen Citral-Eindruck auf, vergleichbar mit einem Citronen-Aroma mit Citral

### Beispiel 5

### Citrone-Mint-Aromen:

### Citrone-Mint-Aroma (ohne 4,8-Dimethyl-3,7-nonadien-2-on)

Es werden vermischt (alle Angaben als Gewichtsteile):

| | |
|---|---|
| Linalylacetat | 2 |
| Lanalool | 2 |
| Krauseminzöl amerikanisch | 35 |
| L-Menthol | 70 |
| Pfefferminzöl Willamette | 70 |
| Pfefferminzöl Yakima | 171 |
| Citronenöl argentinisch | 300 |
| Pfefferminzöl amerikanisch | 350 |

### Citrone-Mint-Aroma (mit 4,8-Dimethyl-3,7-nonadien-2-on)

Es werden vermischt (alle Angaben als Gewichtsteile)

| | |
|---|---|
| Linalylacetat | 2 |
| Lanalool | 2 |
| 4,8-Dimethyl-3,7-nonadien-2-on | 5 |
| Krauseminzöl amerikanisch | 35 |
| L-Menthol | 70 |
| Pfefferminzöl Willamette | 70 |
| Pfefferminzöl Yakima | 166 |
| Citronenöl argentinisch | 300 |
| Pfefferminzöl amerikanisch | 350 |

Test in Zahnpastamasse (Dos.: 1 %)

### Ergebnis:

Das Citronen-Mint-Aroma mit 4,8-Dimethyl-3,7-nonadien-2-on ist intensiver als das Aroma ohne 4,8-Dimethyl-3,7-nonadien-2-on und weist einen deutlich frischeren, spritzigeren, deutlich stärker nach Citrone schmeckenden Charakter auf.

### Beispiel 6

### a) Mango-Aromen:

### Mango-Aroma (ohne 4,8-Dimethyl-3,7-nonadien-2-on)

Es werden vermischt (alle Angaben als Gewichtsteile)

| | |
|---|---|
| Caryophyllenoxid | 5 |
| 8,3-Thiomenthanon (10%ig in 1,2-Propylenglykol) | 10 |
| Nerol | 30 |
| cis-3-Hexenylacetat | 35 |
| cis-3-Hexenol | 100 |
| Alkohol C6 | 120 |
| gamma-decalacton | 180 |
| Furaneol (10%ig in 1,2-Propylenglykol) | 520 |

### Mango-Aromakonzentrat (mit 4,8-Dimethyl-3,7-nonadien-2-on)

Es werden vermischt (alle Angaben als Gewichtsteile):

| | |
|---|---|
| Caryophyllenoxid | 5 |
| 8,3-Thiomenthanon (10%ig in 1,2-Propylenglykol) | 10 |
| 4,8-Dimethyl-3,7-nonadien-2-on | 10 |
| Nerol | 30 |
| cis-3-Hexenylacetat | 35 |
| cis-3-Hexenol | 100 |
| Alkohol C6 | 120 |
| gamma-decalacton | 180 |
| Furaneol (10%ig in 1,2-Propylenglykol) | 510 |

Test im Fertiggetränk (Dos.: 1g/100 Liter RTD), Joghurt ohne Fruchtzubereitung mit 3,5% Fettgehalt (Dos.: 5g/100kg), Eiscreme (Dos.:5g/100 kg), alkoholisches Getränk mit 40 Vol-% Alkohol(Dos.: 1,5g/100 ltr) und Hartkaramellen (Dos.: 10g/100 kg)

### Ergebnis:

Das Mango-Aroma mit 4,8-Dimethyl-3,7-nonadien-2-on weist einen stärkeren Frischfruchtcharakter auf.Es ist deutlich voller und saftiger und hat einen stärkeren Nachgeschmack.

### b) Ananas-Aromen

### Ananas-Aroma (ohne 4,8-Dimethyl-3,7-nonadien-2-on)

Es werden vermischt (alle Angaben als Gewichtsteile)

| | |
|---|---|
| gamma-Octalacton | 15 |
| gamma-Decalacton | 15 |
| 3-Methylthiopropionsäureethylester | 20 |
| Linalool | 30 |
| Hexylcapronat | 40 |
| Ethylcapronat | 60 |
| Allylcapronat | 130 |
| 1,2-Propylenglykol | 160 |
| Furaneol (10%ig in 1,2-Propylenglykol) | 230 |
| Ethylbutyrat | 300 |

### Ananas-Aroma (mit 4,8-Dimethyl-3,7-nonadien-2-on)

Es werden vermischt (alle Angaben als Gewichtsteile):

| | |
|---|---|
| 4,8-Dimethyl-3,7-nonadien-2-on | 10 |
| gamma-Octalacton | 15 |
| gamma-Decalacton | 15 |
| 3-Methylthiopropionsäureethylester | 20 |
| Linalool | 30 |
| Hexylcapronat | 40 |
| Ethylcapronat | 60 |
| Allylcapronat | 130 |
| 1,2-Propylenglykol | 150 |
| Furaneol (10%ig in 1,2-Propylenglykol) | 230 |
| Ethylbutyrat | 300 |

Test im Fertiggetränk (Dos.: 1g/100 Liter RTD), Joghurt ohne Fruchtzubereitung mit 3,5% Fettgehalt (Dos.: 5g/100kg), Eiscreme (Dos.:5g/100 kg), alkoholisches Getränk mit 40 Vol-% Alkohol(Dos.: 1,5g/100 ltr) und Hartkaramellen (Dos.: 10g/100 kg)

### Ergebnis:

Das Ananas-Aroma mit 4,8-Dimethyl-3,7-nonadien-2-on weist einen stärkeren Frischfruchtcharakter auf. Es ist deutlich voller und saftiger und unterstützt die tropischen Noten.

### c) Erdbeer-Aromen

### Erdbeer-Aroma (ohne 4,8-Dimethyl-3,7-nonadien-2-on)

Es werden vermischt (alle Angaben als Gewichtsteile):

| | |
|---|---|
| Methylcinnamat | 25 |
| gamma-Decalacton | 30 |
| Ethylcapronat | 60 |
| cis-3-Hexenylacetat | 60 |
| Ethylbutyrat | 185 |
| cis-3-Hexenol | 100 |
| 2-Methylbuttersäure | 180 |
| Capronsäure | 180 |
| Furaneol (10%ig in 1,2-Propylenglykol) | 180 |

### Erdbeer-Aroma (mit 4,8-Dimethyl-3,7-nonadien-2-on)

Es werden vermischt (alle Angaben als Gewichtsteile).

| | |
|---|---|
| 4,8-Dimethyl-3,7-nonadien-2-on | 10 |
| Methylcinnamat | 25 |
| gamma-Decalacton | 30 |
| Ethylcapronat | 60 |
| cis-3-Hexenylacetat | 60 |
| Ethylbutyrat | 185 |
| cis-3-Hexenol | 100 |
| 2-Methylbuttersäure | 180 |
| Capronsäure | 180 |
| Furaneol (10%ig in 1,2-Propylenglykol) | 180 |

Test im Fertiggetränk (Dos.: 1g/100 Liter RTD), Joghurt ohne Fruchtzubereitung mit 3,5% Fettgehalt (Dos.: 5g/100kg), Eiscreme (Dos.:5g/100 kg), alkoholisches Getränk mit 40 Vol-% Alkohol(Dos: 1,5g/100 ltr) und Hartkaramellen (Dos.: 10g/100 kg)

### Ergebnis

Das Erdbeer-Aroma mit 4,8-Dimethyl-3,7-nonadien-2-on weist einen stärkeren Frischfruchtcharakter auf.Es ist deutlich spritziger und saftiger und unterstützt die reifen Erdbeernoten.

### Beispiel 7: Synthese von 4,8-Dimethyl-3,7-nonadien-2-on

150 g 4,8-Dimethyl-3,7-nonadien-2-ol, 252,5 g alpha-Amylzimtaldehyd und 16,9 g Aluminiumisopropylat werden bei 1 mbar unter Rückfluss über 30 min gekocht. Anschließend wird ein Produkt/Edukt-Gemisch über eine 15 cm Füllkörperkolonne abdestilliert (Rücklaufverhältnis 1:1). Man erhält 130 g des Gemisches aus E- und Z-4,8-Dimethyl-3,7-nonadien-2-ol und E- und Z-4,8-Dimethyl-3,7-nonadien-2-on. Die Summe der beiden Isomeren des 4,8-Dimethyl-3,7-nonadien-2-ols beträgt 23%, die Summe der beiden Isomeren des 4,8-Dimethyl-3,7-nonadien-2-ons beträgt 70%.

| E-4,8-Dimethyl-3,7-nonadien-2-on (EI 70 eV Massenspektrum): | |
|---|---|
| m/z | Intensität/% |
| 69 | 100 |
| 41 | 68 |
| 83 | 47 |
| 43 | 32 |
| 98 | 21 |
| 123 | 17 |
| 108 | 12 |
| 39 | 10 |
| 166 | 9 |
| 27 | 8 |

| Z-4,8-Dimethyl-3,7-nonadien-2-on (EI 70 eV Massenspektrum): | |
|---|---|
| m/z | Intensität/% |
| 69 | 100 |
| 41 | 84 |
| 83 | 64 |
| 43 | 64 |
| 98 | 26 |
| 123 | 25 |
| 108 | 21 |
| 39 | 17 |
| 82 | 19 |
| 109 | 18 |

## Patentansprüche

1. Aromen und/oder Aromakompositionen, die E- und/oder Z-4,8-Dimethyl-3,7-nonadien-2-on der Formeln 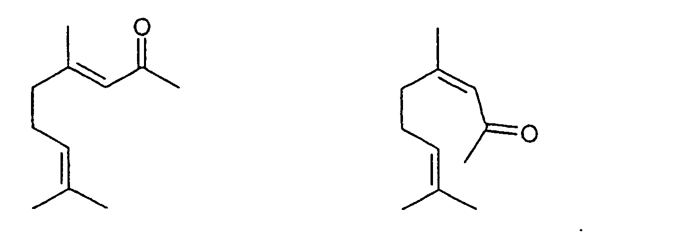 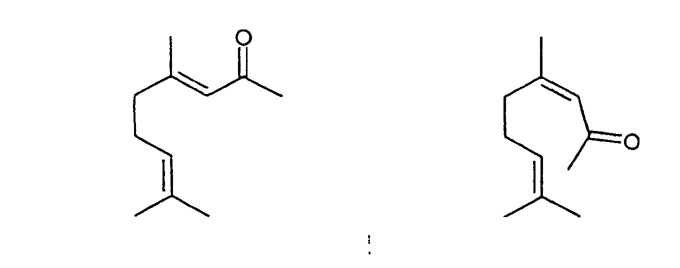 als einzelnes Isomer oder als Gemisch und ein saures Medium enthalten, wobei der Anteil an Säure so gewählt ist, dass ein p_{H} - Wert < 5 eingestellt ist.

2. Verwendung von Aromen und/oder Aromakompositionen, die E- und/oder Z-4,8-Dimethyl-3,7-nonadien-2-on der Formeln 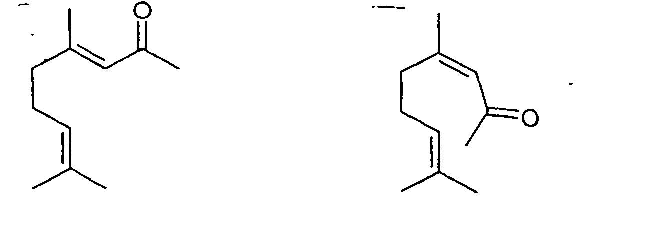 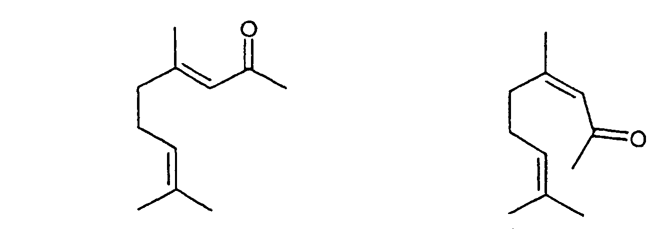 als einzelnes Isomer oder als Gemisch enthalten, in sauren Medium wobei der Anteil an Säure so gewählt ist, dass ein p_{H}- Wert < 5 eingestellt ist.

3. Verwendung von Aromen und/oder Aromakompositionen, die E- und/oder Z-4,8-Dimethyl-3,7-nonadien-2-on als einzelnes Isomer oder als Gemisch enthalten, im Nahrungs- und Genussmittelbereich.

4. Verwendung von Aromen und/oder Aromakompositionen, die E- und/oder Z-4,8-Dimethyl-3,7-nonadien-2-on als einzelnes Isomer oder als Gemisch enthalten, für die Mundhygiene.

5. Nahrungs- und Genussmittel, die E- und/oder Z-4,8-Dimethyl-3,7-nonadien-2-on als einzelnes Isomer oder als Gemisch enthalten.

6. Zubereitungen für die Mundhygiene, die E- und/oder Z-4,8-Dimethyl-3,7-nonadien-2-on als einzelnes Isomer oder als Gemisch enthalten.

## Claims

1. Aromatic substances and/or aromatic compositions containing E- and/or Z-4,8-dimethyl-3,7-nonadien-2-one having the formulae 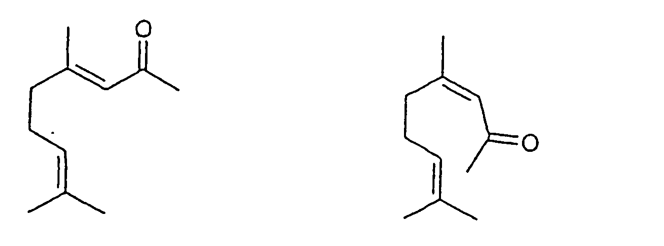 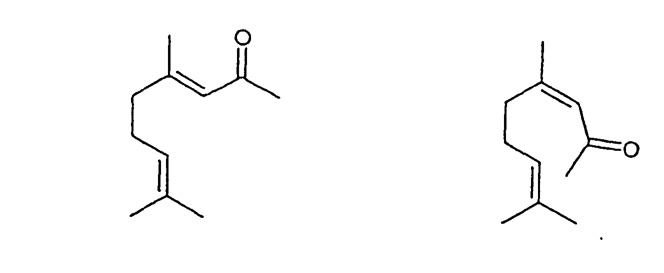 as the single isomer or as a mixture and an acid medium, wherein the content of acid is chosen such that a pH of < 5 is established.

2. Use of aromatic substances and/or aromatic compositions containing E- and/or Z-4,8-dimethyl-3,7-nonadien-2-one having the formulae 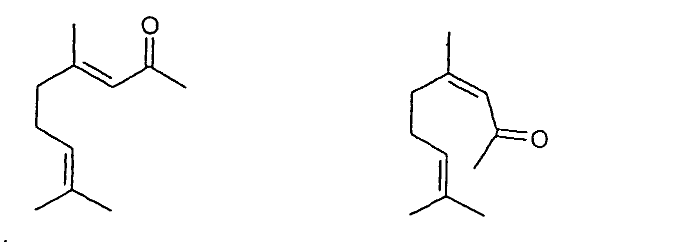 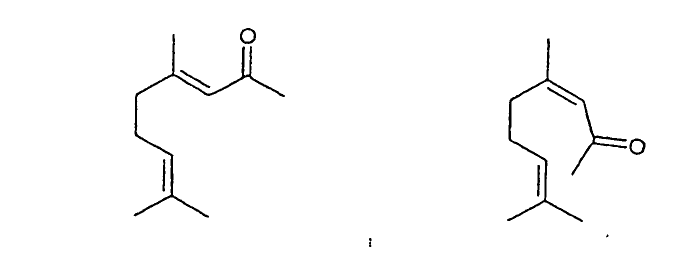 as the single isomer or as a mixture, in acid media, wherein the content of acid is chosen such that a pH of < 5 is established.

3. Use of aromatic substances and/or aromatic compositions containing E- and/or Z-4,8-dimethyl-3,7-nonadien-2-one as the single isomer or as a mixture, in the food, beverages and tobacco sector.

4. Use of aromatic substances and/or aromatic compositions containing E- and/or Z-4,8-dimethyl-3,7-nonadien-2-one as the single isomer or as a mixture, for oral hygiene.

5. Food, beverages and tobacco products containing E-and/or Z-4,8-dimethyl-3,7-nonadien-2-one as the single isomer or as a mixture.

6. Preparations for oral hygiene containing E- and/or Z-4,8-dimethyl-3,7-nonadien-2-one as the single isomer or as a mixture.

## Revendications

1. Arômes et/ou compositions d'arômes, comprenant du E-et/ou Z-4,8-diméthyl-3,7-nonadièn-2-one de formules 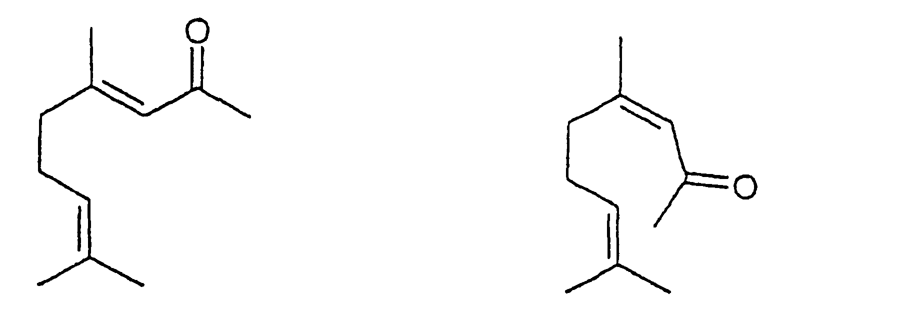 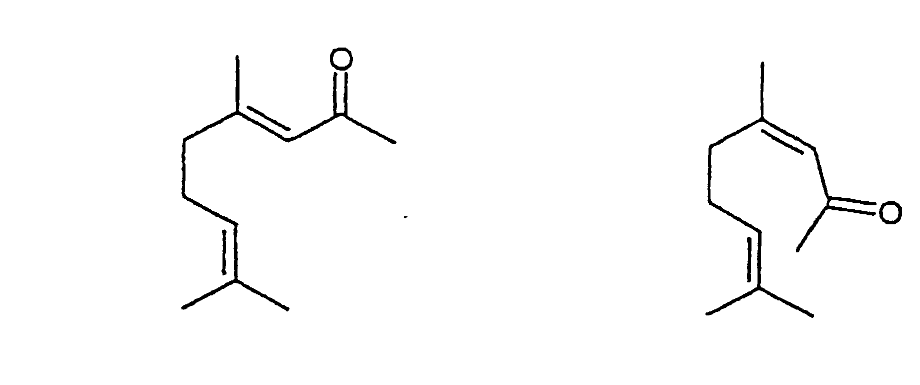 sous forme d'isomère seul ou sous forme de mélange, et un milieu acide, où la proportion d'acide est choisie de manière à ajuster un pH < 5.

2. Utilisation d'arômes et/ou de compositions d'arômes, comprenant du E- et/ou Z-4,8-diméthyl-3,7-nonadièn-2-one de formules 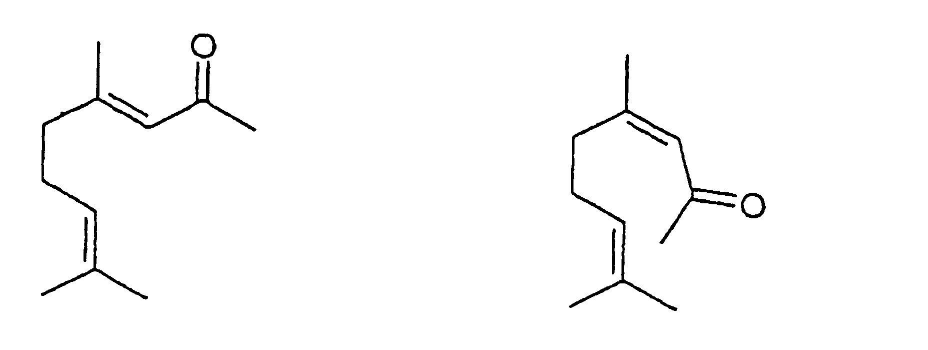 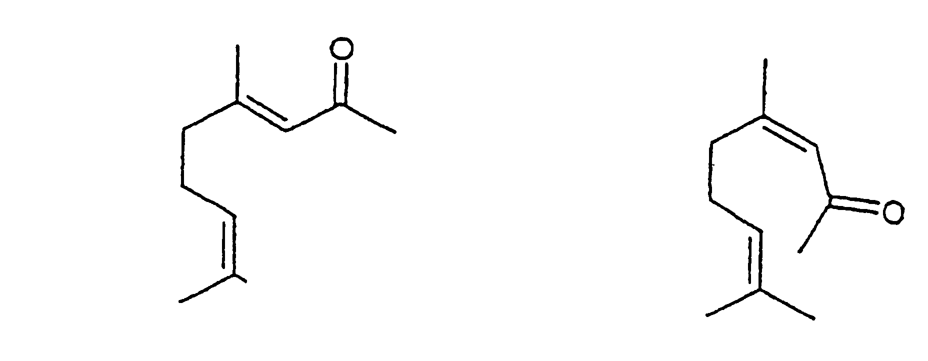 sous forme d'isomère seul ou sous forme de mélange, en milieux acides, où la proportion d'acide est choisie de manière à ajuster un pH < 5.

3. Utilisation d'arômes et/ou de compositions d'arômes, comprenant du E- et/ou Z-4,8-diméthyl-3,7-nonadièn-2-one sous forme d'isomère seul ou sous forme de mélange, dans le domaine des produits alimentaires et des produits sucrés et alcoolisés.

4. Utilisation d'arômes et/ou de compositions d'arômes, comprenant du E- et/ou Z-4,8-diméthyl-3,7-nonadièn-2-one sous forme d'isomère seul ou sous forme de mélange, pour l'hygiène buccale.

5. Produits alimentaires et produits sucrés et alcoolisés, comprenant du E- et/ou Z-4,8-diméthyl-3,7-nonadièn-2-one sous forme d'isomère seul ou sous forme de mélange.

6. Préparations pour l'hygiène buccale, comprenant du E-et/ou Z-4,8-diméthyl-3,7-nonadièn-2-one sous forme d'isomère seul ou sous forme de mélange.
